# EUROPEAN PATENT APPLICATION

(11) **EP 4 539 202 A1**
(43) Date of publication of application: **16.04.2025**
(21) Application number: 24200801.9
(22) Date of filing: 17.09.2024
(51) Int. Cl.: H01M 10/44, H01M 10/04, B60L 53/00, H01M 50/204

(54) **A BATTERY CHARGING SYSTEM**

(30) Priority: 10.10.2023 GB 202315517
(71) Applicant: Rolls-Royce plc, London N1 9FX (GB)
(72) Inventor: Lambourne, Alexis, Derby, DE24 8BJ (GB); Chittim, Sophie, Derby, DE24 8BJ (GB)
(74) Representative: Rolls-Royce plc

(57) **Abstract**

According to the present disclosure, there is provided a battery charging system 1000, 1000', 1000", comprising: a battery enclosure 102, 102' 102" defining an interior space 103 containing a battery storage medium, the interior space 103 configured to house one or more battery cells 101; a charging terminal 107a, 107b electrically coupled to the one or more battery cells 101 and configured to receive electrical power from a power source 104 to charge the one or more battery cells 101; wherein the interior space 103 is configured to be coupled to a pressurising device 106, 112 for applying pressure to the battery storage medium in the interior space 103; and wherein during charging of the one or more battery cells 101, the battery storage medium in the interior space 103 is pressurised to cause an isostatic pressure to be applied to the one or more battery cells 101. A method 500 of charging of charging one or more battery cells 101 is also provided.

## Description

### Field of Invention

The present disclosure relates to a battery charging system and a method of charging one or more battery cells.

### Background

Interest in aircraft with electric, hybrid electric and 'more electric' propulsion systems is increasing because of the need to reduce carbon emissions and pollution, and because of developments in the facilitating electrical technologies. Hybrid-electric propulsion systems include multiple energy sources, for example engines (e.g., gas turbine or diesel engines), energy storage (batteries) and/or fuel cells. Battery-electric propulsion systems use only batteries as an energy source for their propulsors. So-called 'more electric' aircraft may also include energy storage to provide additional functionality (e.g., electric starting without the use of ground equipment) and to improve the efficiency and operability of their engines. The batteries used in these applications take the form of battery packs that include multiple battery cells, for example lithium-ion cells, electrically connected to meet the charge capacity and power requirements of the application.

Due to weight and volume requirements in aircraft, there is a strong demand for developing batteries which have high energy density. This has led to the development of new battery chemistries, including lithium metal battery cells. Lithium metal batteries are batteries that have metallic lithium as an anode. These batteries have significantly improved energy density over lithium-ion batteries; however, they also encounter issues during charging. Lithium metal batteries are more susceptible to dendrite formation over time. Dendrites are metallic microstructures that form on the anode of the battery during charging. Dendrites are more likely to form under certain conditions, such as overcharging or low-temperature charging conditions. Over time, dendrites can grow and eventually reach the cathode of the battery, causing the battery to short circuit. This can lead to catastrophic failures of the battery and the battery pack, including causing fires, which is a major safety concern in aviation.

It is therefore desired to develop a solution that suppresses dendrite formation in battery cells for aerospace applications.

### Summary

According to a first aspect, there is provided a battery charging system, comprising: a battery enclosure defining an interior space containing a battery storage medium, the interior space configured to house one or more battery cells; a charging terminal electrically coupled to the one or more battery cells and configured to receive electrical power from a power source to charge the one or more battery cells; wherein the interior space is configured to be coupled to a pressurising device for applying pressure to the battery storage medium in the interior space; and wherein during charging of the one or more battery cells, the battery storage medium in the interior space is pressurised to cause an isostatic pressure to be applied to the one or more battery cells.

During discharge of the one or more battery cells, the pressure of the battery storage medium may be configured to be reduced compared to the pressure of the battery storage medium during charging of the one or more battery cells.

The battery storage medium may be a gas. The battery storage medium may be a dielectric gas, a dielectric liquid, or a dielectric semi-solid.

The pressurising device may be a gas compression device.

The power source may be a charging device disposed remote from the battery enclosure.

The pressurising device may be integrated with the charging device.

The pressurising device may be integrated with the battery enclosure.

The pressurising device may comprise a heater configured to generate heat to pressurise the battery storage medium.

The heater may be disposed in the interior space.

The interior space may comprise a first plenum containing the battery storage medium and a second plenum containing a pressure-generating medium. The one or more battery cells may be disposed within the first plenum and the heater may be disposed in the second plenum. The heater may be configured to heat the pressure-generating medium.

The battery storage medium and the pressure-generating medium may both be compressible media.

The first plenum and the second plenum may be configured for fluid communication with one another.

The first plenum and the second plenum may be fluidically isolated from one another. The battery enclosure may further comprise a pressurising element disposed between the first plenum and the second plenum. The pressurising element may be configured to pressurise the battery storage medium in response to an increase in pressure of the pressure-generating medium.

The pressurising element may form at least part of a barrier wall separating the first plenum and the second plenum.

The pressurising element may comprise a flexible membrane configured to deflect and pressurise the battery storage medium in response to an increase in pressure of the pressure-generating medium.

The heater may be a positive temperature coefficient (PTC) heater.

The isostatic pressure may be between 120 kPa and 400 kPa.

The power source may be configured to charge the one more battery cells at 100-500 kW.

According to a second aspect, there is provided an aircraft comprising a battery charging system according to the first aspect.

According to a third aspect, a method of charging one or more battery cells, wherein the one or more battery cells are housed in an interior space defined by a battery enclosure, the interior space containing a battery storage medium, the method comprising: pressurising the battery storage medium in the interior space to cause an isostatic pressure to be applied to the one or more battery cells; and charging the one or more battery cells while the isostatic pressure is applied to the one or more battery cells.

The method may further comprise reducing the pressure of the battery storage medium after the one or more battery cells have been charged.

Pressurising the battery storage medium may cause an isostatic pressure between 120 kPa and 400 kPa to be applied to the one or more battery cells.

The skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

### Brief Description of the Drawings

Embodiments will now be described by way of example only, with reference to the Figures, in which:
**Figure 1** is a sectional side view of a gas turbine engine;
**Figure 2A** is a schematic illustration of a hybrid electric aircraft propulsion system;
**Figure 2B** is a schematic illustration of a battery electric aircraft propulsion system;
**Figure 3** is a perspective view of an aircraft incorporating a battery pack;
**Figure 4** is a schematic view of a first example battery charging system according to the present disclosure;
**Figure 5** is a schematic view of a second example battery charging system according to the present disclosure;
**Figure 6** is a schematic view of a third example battery charging system according to the present disclosure; and
**Figure 7** is a flow diagram showing a method of charging one or more battery cells according to the present disclosure.

### Detailed Description

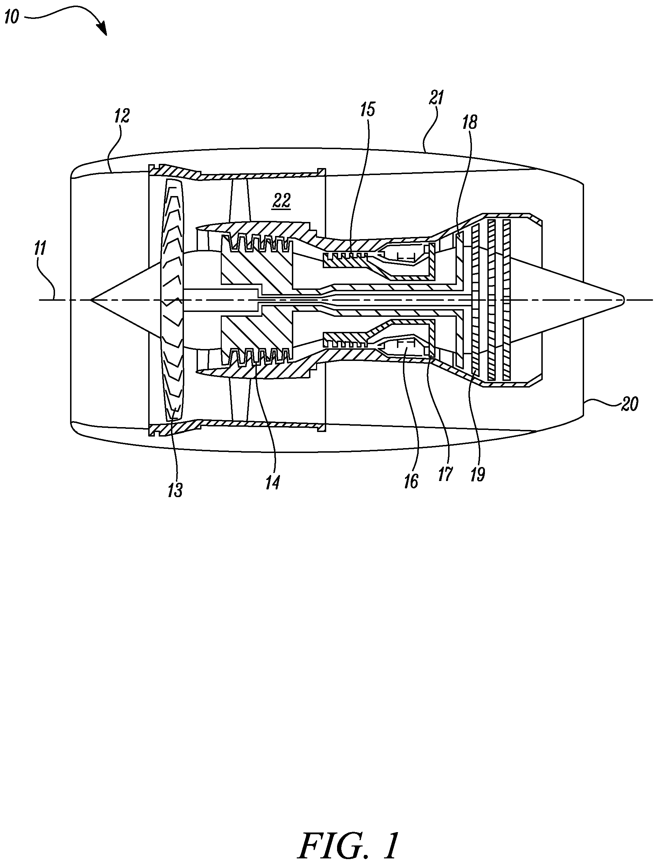

With reference to **Figure 1****,** a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high-pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high-, intermediate- and low-pressure turbines 17, 18, 19 before being exhausted through the nozzle 20 to provide additional propulsive thrust. The high- 17, intermediate- 18 and low-19 pressure turbines drive respectively the high-pressure compressor 15, intermediate-pressure compressor 14 and fan 13, each by suitable interconnecting shaft.

Other gas turbine engines to which the present disclosure may be applied may have alternative configurations. By way of example such engines may have an alternative number of interconnecting shafts (e.g., two) and/or an alternative number of compressors and/or turbines. Further the engine may comprise a gearbox provided in the drive train from a turbine to a compressor and/or fan.

The gas turbine engine may also incorporate or interface with one or more battery cells, for example to power ancillary electrical systems and/or to cooperate with one or more electric machines involved in the transfer of mechanical power to and from one or more of the interconnecting shafts.

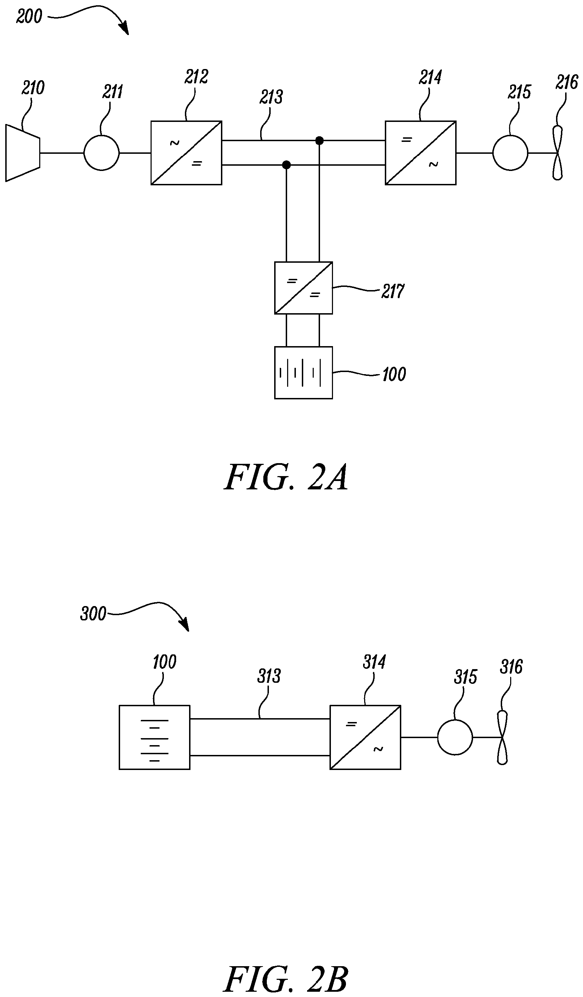

Now referring to **Figure 2A****,** the propulsion system of a hybrid electric aircraft is generally indicated at 200 and incorporates both an engine 210, such as the gas turbine engine 10 described above with reference to Figure 1, and a battery pack 100. Both the engine 210 and the battery pack 100 are used as energy sources to power a motor-driven propeller 216, as well as ancillary electrical systems (not shown). The propulsion system 200 of the hybrid electric aircraft will typically further comprise a generator 211, an AC/DC converter 212, a high voltage DC (HVDC) distribution bus 213, a DC/AC converter 214, a motor 215 that drives the propeller 216, and a DC/DC converter 217.

A shaft of the engine 210 is coupled to and drives the rotation of a shaft of the generator 211 which thereby produces alternating current. The AC/DC converter 212, which faces the generator 211, converts the alternating current into direct current which is fed to various electrical systems via the DC distribution bus 213. These electrical systems include the motor 215 that drives the propeller 216. The motor 215 will typically be a synchronous motor that interfaces with the DC distribution bus 213 via the DC/AC converter 214.

The battery pack 100, which may be made up of a number of battery modules (e.g., lithium-ion or lithium-metal battery modules) connected in series and/or parallel, is connected to the DC distribution bus 213 via the DC/DC converter 217. The DC/DC converter 217 converts between a voltage of the battery pack 100 and a voltage of the DC distribution bus 213. In this way, the battery pack 100 can replace or supplement the power provided by the engine 210 (by discharging and thereby feeding the DC distribution bus 213) or can be charged using the power provided by the engine 210 (by being fed by the DC distribution bus 213).

It will be understood that the hybrid electric propulsion system 200 of Figure 2A is of the series hybrid type. Parallel hybrid electric systems, turboelectric systems and systems having features of more than one type are also known and in accordance with the present disclosure.

A battery pack will also appear in the propulsion system of a battery electric aircraft, generally indicated as 300 in **Figure 2B****.** The battery pack 100 feeds a DC distribution bus 313, possibly via a DC/DC converter (not shown), which delivers power to one or more synchronous motors 315 via a DC/AC converter 314. The one or more motors 315 drive the one or more propellers 316 that propel that aircraft.

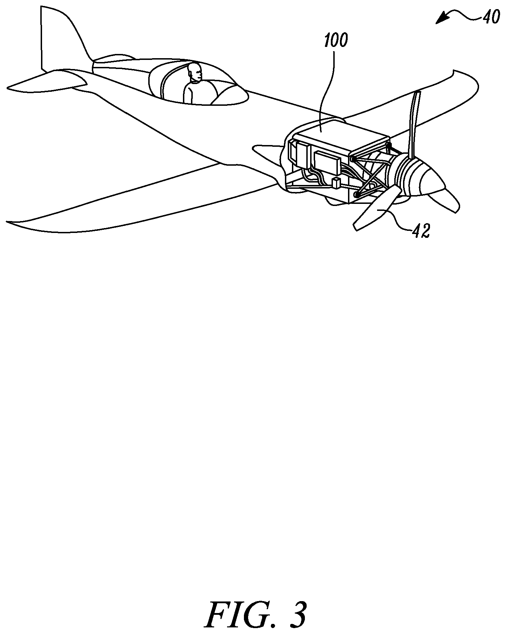

**Figure 3** illustrates a conventional take-off and landing (CTOL) aircraft 40 with a battery electric propulsion system. The front portion of the aircraft 10 is cutaway to show a battery pack 100, which in this example is located in what would be the engine bay of an engine-powered aircraft. The battery pack 100 supplies electrical power to the windings of an electric motor via an inverter, and the rotor of the motor drives rotation of a shaft of a propeller 42.

It will be understood that the electric CTOL aircraft 40 of Figure 3 is only intended to be an example. Various other configurations are known, will occur to those skilled in the art and are in accordance with the present disclosure.

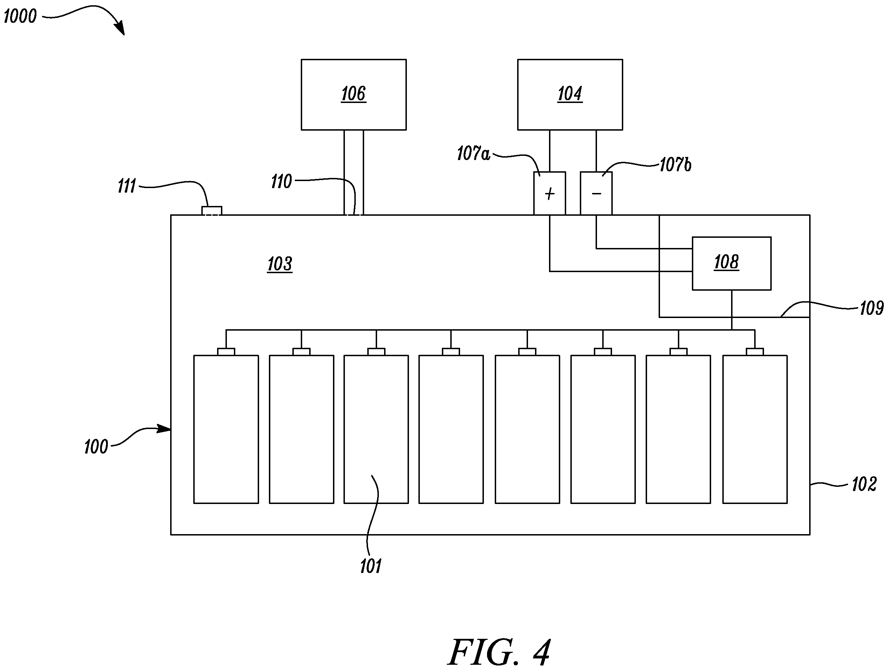

**Figure 4** shows a first example battery charging system 1000 according to the present disclosure. The battery charging system 1000 comprises a battery pack 100, a charging device 104, and a pressurising device 106. The battery pack 100 comprises a battery enclosure 102 or housing, defining an interior space 103 therewithin. The interior space 103 contains a battery storage medium. The battery storage medium may be a compressible medium, for example a gas, e.g., air. The battery pack 100 also comprises a plurality of battery cells 101 housed within the interior space 103 of the battery enclosure 102. The plurality of battery cells 101 may be a plurality of lithium-ion cells or a plurality of lithium metal cells. The battery cells 101 may be of any cell type, such as pouch cells, cylindrical cells, or prismatic cells. In other examples, the battery pack may only comprise a single battery cell housed within the interior space 103 of the battery enclosure 102. The plurality of battery cells 101 are arranged in any suitable arrangement within the interior space 103, for example, they may be arranged as an array. The battery cells 101 may be supported or held in any given arrangement using a carrier structure (not shown). The plurality of battery cells 101 are electrically connected together using one or more suitable electrical connectors, such as cables or busbars.

The battery cells 101 are also connected to a battery management system (BMS) 108. The BMS 108 is configured to monitor and control the battery cells 101, including monitoring and controlling their state of charge, power distribution, current, voltage, and temperature. The BMS 108 can also control a rate of charge of the battery cells 101. The battery pack 100 further comprises a pair of battery terminals 107a, 107b, which are configured to be electrically connected to a charging device 104 to charge the battery cells 101. The battery terminals 107a, 107b include a positive terminal 107a and a negative terminal 107b. In other examples, the battery pack 100 may comprise multiple pairs of battery terminals 107a, 107b. The battery terminals 107a, 107b are electrically connected to the battery cells 101 via the BMS 108. The charging device 104 is configured to be coupled to an electric power supply and deliver current to the battery cells 101 via the battery terminals 107a, 107b and the BMS 108, to charge the battery cells 101. In this example, the BMS 108 is disposed within a separate compartment 109 within the interior space 103.

The battery enclosure 102 also comprises at least one port 110 configured to be fluidly connected to a pressurising device 106. The port 110 may comprise a suitable valve arranged to close the port 110 and prevent fluid flow into and out of the port 110 when the pressurising device 106 is not connected to the port 110 and arranged to open the port 110 to allow fluid flow into the port 110 when the pressurising device 106 is connected to the port 110. For example, the valve may be a one-way valve or a check-valve. The interior space 103 is normally at a nominal pressure, which may be atmospheric pressure i.e., about 1 bar or 101.3 kPa. The pressurising device 106 is configured to pressurise the battery storage medium in the interior space 103. In particular, the pressurising device 106 is configured to increase the pressure of the battery storage medium in the interior space 103, such that a positive pressure is generated within the interior space 103. Here a positive pressure is intended to mean that the pressure within the interior space 103 is higher than the pressure of the environment surrounding the battery enclosure 102. When a positive pressure is generated within the interior space 103, an isostatic pressure is applied to each of the battery cells 101. It will be understood that an isostatic pressure means that pressure is applied to the battery cell 101 by the battery storage medium from all directions. The pressurising device 106 may be a gas compressor or pump configured to pump gas (e.g., air) into the interior space 103 and increase the pressure of the battery storage medium in the interior space 103, such that a positive pressure is generated within the interior space 103. The pressurising device 106 is also configured to remove pressure from or depressurise the battery storage medium in the interior space 103, such that the pressure within the interior space 103 can be returned to its nominal pressure or atmospheric pressure. For this purpose, the pressurising device 106 is also configured to remove air from the interior space 103.

The pressurising device 106 and/or the battery enclosure 102 may also include a pressure sensor or gauge configured to measure the pressure level of the battery storage medium in the interior space 103. The pressurising device 106 is separate from the charging device 104. However, in other examples, the pressurising device 106 may be integrated with the charging device 104 in a single apparatus. The battery enclosure 102 further comprises a vent 111 which is configured to open and release pressure from the interior space 103 when the pressure in the interior space 103 reaches or exceeds a predetermined pressure threshold. The vent 111 may comprise any suitable pressure release valve, for example a burstable disc.

Both the charging device 104 and the pressurising device 106 are located remote from the battery pack 100. For example, the battery pack 100 may be disposed on board an aircraft and the charging device 104 and the pressurising device 106 may be disposed outside the aircraft, i.e., on the ground.

In use, the charging device 104 and the pressurising device 106 are coupled to the battery pack 100 at the terminals 107a, 107b and the port 110, respectively. The battery storage medium in the interior space 103 will be at its nominal pressure, which may be atmospheric pressure. Prior to charging the battery pack 100, the pressurising device 106 is operated to increase the pressure of the battery storage medium within the interior space 103 and generate a positive pressure within the interior space 103. The positive pressure may be between 1.2 bar and 20 bar (120 kPa to 2 MPa). Optionally, the positive pressure may be between 1.2 bar and 4 bar (120 kPa to 400 kPa). By generating this positive pressure in the battery storage medium in the interior space 103, an isostatic pressure is applied to the battery cells 101, putting them in a state of compression. Once the battery storage medium has been pressurised to a desired positive pressure level, the pressurising device 106 is operated such that it no longer increases the pressure within the interior space 103, and so that the positive pressure level is maintained. Following this, the charging device 104 is operated to charge the battery cells 101. The charging device 104 is configured to charge the battery cells 101 at a fast charge rate. For example, the charging device 104 may have a power rating of between 100 to 500 kW. The battery pack 100 may have an energy capacity of 50-150 kWh. The charging device 104 may be configured to charge the battery pack 100 at a charge rate (C-rate) of 1C-10C.

Once the battery cells 101 have been charged to the desired level, the charging device 104 is operated to terminate the charging operation. Following this, the pressurising device 106 is operated to depressurise the interior space 103 such that the pressure within the interior space 103 is returned to its nominal pressure. Subsequently, the charging device 104 and the pressurising device 106 can be disconnected from the battery pack 100. Therefore, during use of the battery cells 103, i.e., during a discharging operation, the battery storage medium is at a lower pressure than during a charging operating, such that the battery cells 101 are not placed in a state of compression during discharge.

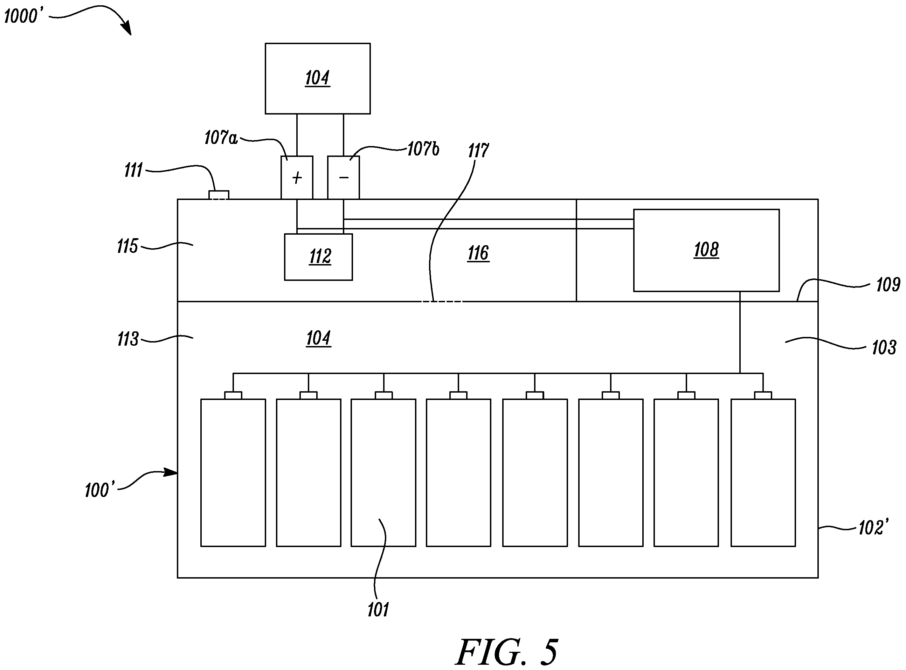

**Figure 5** shows a second example battery charging system 1000' according to the present disclosure. The second example battery charging system 1000' is similar to the first example battery charging system 1000, with like reference numerals denoting like features. The second example battery charging system 1000' differs from the first example battery charging system 1000 with respect to the pressurising device.

The battery charging system 1000' comprises a battery pack 100' and a charging device 104. The battery pack 100' comprises a battery enclosure 102' or housing, defining an interior space 103 therewithin. The battery enclosure 102' comprises a first compartment 113, a second compartment 115, and a BMS compartment 109. The first compartment 113 defines a first plenum 114 of the interior space 103 and the second compartment 115 defines a second plenum 116 of the interior space 103. The first compartment 113 and the second compartment 115 are in fluid communication with one another via a port 117. The port 117 is formed in a compartment wall disposed between the first compartment 113 and the second compartment 115. The first plenum 114 contains a battery storage medium and the second plenum 116 contains a pressure-generating medium. The pressure-generating medium is a compressible medium. The battery storage medium may also be a compressible medium. The compressible medium is a gas, for example one of air, a dielectric or fire-suppressant gas (e.g., CO₂, Argon, Nitrogen, SF₆). In other examples, the battery storage medium may be a dielectric liquid (e.g., silicone oil), or a dielectric semi-solid or gel (e.g., low-modulus silicone rubber or silicone gel). The port 117 allows a pressure change in the second plenum 116 to be transmitted to the first plenum 114. Where both the battery storage medium and the pressure-generating medium are compressible media, the port 117 can allow the compressible media to flow or move between the first plenum 114 and the second plenum 116. Where the battery storage medium is not a compressible medium, the port 117 can enable pressure changes in the second plenum 116 to be communicated to the first plenum 114.

The battery pack 100' also comprises a plurality of battery cells 101 housed within the first compartment 113 of the battery enclosure 102, such that the battery cells 101 are disposed within the first plenum 114 of the interior space 103. The plurality of battery cells 101 may be a plurality of lithium-ion cells or a plurality of lithium metal cells. The battery cells 101 may be of any cell type, such as pouch cells, cylindrical cells, or prismatic cells. In other examples, the battery pack may only comprise a single battery cell housed within the interior space 103 of the battery enclosure 102. The plurality of battery cells 101 are arranged in any suitable arrangement within the first plenum 114. The battery cells 101 may be supported or held in any given arrangement using a carrier structure (not shown). The plurality of battery cells 101 are electrically connected together using one or more suitable electrical connectors, such as cables or busbars.

The battery cells 101 are also connected to a battery management system (BMS) 108. The BMS 108 is configured to monitor and control the battery cells 101, including monitoring and controlling their state of charge, power distribution, current, voltage, and temperature. The BMS 108 can also control a rate of charge of the battery cells 101. The battery pack 100' further comprises a pair of battery terminals 107a, 107b, which are configured to be electrically connected to a charging device 104 to charge the battery cells 101. The battery terminals 107a, 107b include a positive terminal 107a and a negative terminal 107b. In other examples, the battery pack 100' may comprise multiple pairs of battery terminals 107a, 107b. The battery terminals 107a, 107b are electrically connected to the battery cells 101 via the BMS 108. The charging device 104 is configured to be coupled to an electric power supply and deliver current to the battery cells 101 via the battery terminals 107a, 107b and the BMS 108, to charge the battery cells 101. The BMS 108 is disposed within the BMS compartment 109 of the battery enclosure 102.

The battery pack 100' further comprises a heater 112 disposed in the second plenum 116. The heater 112 is electrically connected to the battery terminals 107a, 107b. The heater 112 is connected in parallel to the BMS 108. The heater 112 is configured to receive electrical power from the charging device 104, when the charging device 104 is coupled to an electric power supply. The heater 112 is configured to heat the pressure-generating medium within the second plenum 116. By heating the pressure-generating medium, the heater 112 causes the pressure-generating medium to expand and cause the pressure of the pressure-generating medium within the second plenum 116 to increase. As the second plenum 116 is arranged to communicate pressure changes to the first plenum 114 via the port 117, the heater 112 also causes the pressure of the battery storage medium within the first plenum 114 to increase. The heater 112 therefore generates a positive pressure within the interior space 103, causing an isostatic pressure to be applied to the battery cells 101. In this way, the heater 112 acts as a pressurising device.

The heater 112 may be any electrical heater. In some examples, the heater 112 may be a positive temperature coefficient (PTC) heater. A PTC heater comprises a heating element being formed from a PTC material. A PTC material is one which conducts electricity and resistively heats, in that as its temperature increases, its resistance to current increases proportionately. Once its temperature reaches a Curie temperature, its resistance rises sharply, and then the material acts as an electrical insulator, and therefore does not heat further. Once the material cools down below its Curie temperature, its resistance decreases and can act as an electrical conductor once again. The material can then heat up again until its Curie temperature is reached. In this way, a PCT heater is able to maintain a set temperature, without overheating. No sensors or external control are required. The PTC material may be a ceramic material. The material of the PTC heater can be tuned such that it exhibits a different Curie temperature, and therefore is able to maintain a different temperature set point.

In other examples, the heater 112 may be a resistive heater. The heater 112 may be combined with a temperature sensor and a heater controller to monitor the temperature of the heater and control the operation of the heater such that a desired temperature set point can be maintained.

By altering the temperature set point, the positive pressure that is generated in the interior space 103 can be varied. In particular, the pressure can be increased by having a higher temperature set point. The positive pressure that is generated in the interior space 103 can also be varied by altering the volume of the interior space 103. In this example, the volume of the interior space 103 is defined by the total volume of the first plenum 114 and the second plenum 116. The pressure can be increased by reducing the volume of the interior space 103.

The battery enclosure 102' further comprises a vent 111 which is configured to open and release pressure from the interior space 103 when the pressure in the interior space 103 reaches or exceeds a predetermined pressure threshold. The vent 111 may comprise any suitable pressure release valve, for example a burstable disc.

In this example, the charging device 104 is located remote from the battery pack 100'. For example, the battery pack 100' may be disposed on board an aircraft and the charging device 104 may be disposed outside the aircraft, i.e., on the ground. In other examples, the both the battery pack 100' and the charging device 104 may be disposed onboard an aircraft, as the aircraft may be a hybrid-electric aircraft. The charging device 104 is configured to selectively provide power to the heater 112 and/or the battery cells 101, for example through use of a switching device (not shown).

In use, the charging device 104 is coupled to the battery pack 100' at the terminals 107a, 107b. The interior space 103 will be at its nominal pressure, which may be atmospheric pressure. The charging device 104 is operated to provide power to the heater 112, such that the heater 112 provides heat to the interior space 103. In particular, the heater 112 heats up the pressure-generating medium in the second plenum 116, causing the pressure-generating medium to expand and increase in pressure. As the first plenum 114 and second plenum 116 are connected for transmitting pressure change therebetween, the increase in pressure in the pressure-generating medium is configured to cause the battery storage medium in the first plenum 114 to increase in pressure.

Thereby, a positive pressure is generated in the interior space 103. The positive pressure may be between 1.2 bar and 20 bar (120 kPa to 2 MPa). Optionally, the positive pressure may be between 1.2 bar and 4 bar (120 kPa to 400 kPa). By generating this positive pressure in the interior space 103, an isostatic pressure is applied to the battery cells 101, putting them in a state of compression. The heater 112 is maintained a desired temperature set-point which corresponds to the desired positive pressure level. Once the battery storage medium has been pressurised to the desired positive pressure level, the charging device 104 is operated to charge the battery cells 101. The charging device 104 is configured to charge the battery cells 101 at a fast charge rate. For example, the charging device 104 may have a power rating of between 100 to 500 kW. The battery pack 100 may have an energy capacity of 50-150 kWh. The charging device 104 may be configured to charge the battery pack 100 at a charge rate of 1C-10C. Once the battery cells 101 have been charged to the desired level, the charging device 104 is operated to terminate the charging operation and turn off the heater 112. When the heater 112 is turned off, the temperature of the interior space 103 decreases, causing the pressure in the interior space 103 to decrease to its nominal pressure. Subsequently, the charging device 104 can be disconnected from the battery pack 100. Therefore, during use of the battery cells 103, i.e., during a discharging operation, the battery storage medium is at a nominal pressure which is lower than its pressure during the charging operation, which means that the battery cells 101 are not placed in a state of compression.

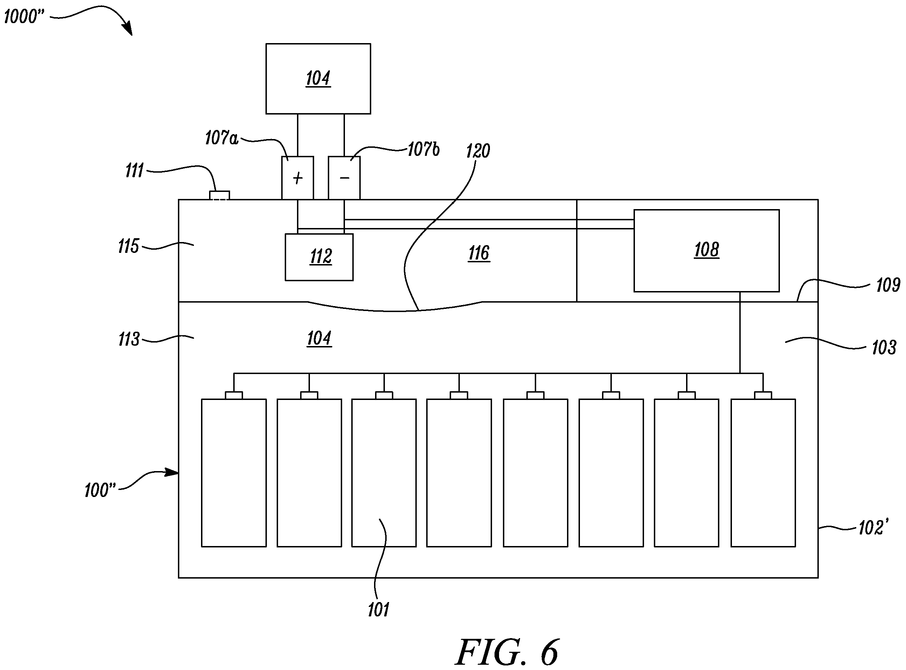

**Figure 6** shows a third example battery charging system 1000" according to the present disclosure. The third example battery charging system 1000" is similar to the second example battery charging system 1000', with like reference numerals denoting like features. The third example battery charging system 1000" differs from the second example battery charging system 1000' with respect to how the heater transmits pressure to the battery cells.

In the third example battery charging system 1000", the first plenum 114 and the second plenum 116 are fluidically isolated from each other. In particular, there is a barrier wall separating the first plenum 114 and the second plenum 116. Therefore, media cannot flow or move between the first compartment 113 and the second compartment 115. Instead, the first plenum 114 contains the battery storage medium and the second plenum 116 contains the pressure-generating medium. The battery storage medium and the pressure-generating medium may be the same or may be different.

The battery enclosure 102' comprises a pressurising element 120 disposed between the first compartment 113 and the second compartment 115. The pressurising element 120 is configured to transmit pressure from the second plenum 116 to the first plenum 114. In particular, the pressurising element 120 is configured to move to pressurise the battery storage medium in the first plenum 114 when the pressure of the pressure-generating medium in the second plenum 116 increases to be greater than the pressure in the first plenum 114. When the pressurising element 120 moves, the volume of the first compartment 113 is configured to reduce, thereby generating a positive pressure in the first plenum 114. In the present example, the pressurising element 120 is a flexible membrane or diaphragm which is configured to move or deflect when the pressure of the pressure-generating medium in the second plenum 116 is greater than the pressure of the battery storage medium in the first plenum 114, thereby reducing the volume of the first compartment 113 and generating a positive pressure in the battery storage medium in the first plenum 114. The flexible membrane is formed as at least part of the barrier wall separating the first compartment 113 and the second compartment 115. In other examples, the pressurising element 120 may be a rigid member configured to move to reduce the volume of the first compartment 113 when the pressure in the second plenum 116 is greater than the pressure in the first plenum 114. For example, the pressurising element 120 may be a piston.

In use, the charging device 104 is coupled to the battery pack 100" at the terminals 107a, 107b. The media in the first plenum 114 and the second plenum 116 will be at a nominal pressure, which may be atmospheric pressure. The charging device 104 is operated to provide power to the heater 112, such that the heater 112 provides heat to the second plenum 116. The heater 112 heats up the pressure-generating medium in the second plenum 116, causing the pressure-generating medium to expand and increase in pressure. This causes the pressurising element 120 to move or deflect towards the first compartment 113, thereby reducing the volume of the first compartment 113, and applying a pressure to the battery storage medium in the first plenum 114. This generates a positive pressure in the first plenum 114. By generating this positive pressure in the first plenum 114, an isostatic pressure is applied to the battery cells 101, putting them in a state of compression. The heater 112 is maintained at a desired temperature set-point which corresponds to a desired positive pressure level. Once the battery storage medium in the first plenum 114 has been pressurised to a desired positive pressure level, the charging device 104 is operated to charge the battery cells 101. Once the battery cells 101 have been charged to the desired level, the charging device 104 is operated to terminate the charging operation and turn off the heater 112. When the heater 112 is turned off, the temperature of the second plenum 116 decreases, causing the pressure of the pressure-generating medium in the second plenum 116 to decrease to its nominal pressure. This also causes the pressurising element 120 to move or deflect back towards a rest position, thereby removing the positive pressure in the first plenum 114. Subsequently, the charging device 104 can be disconnected from the battery pack 100. Therefore, during use of the battery cells 103, i.e., during a discharging operation, the battery storage medium is at a nominal pressure which is lower than its pressure during the charging operation, which means that the battery cells 101 are not placed in a state of compression.

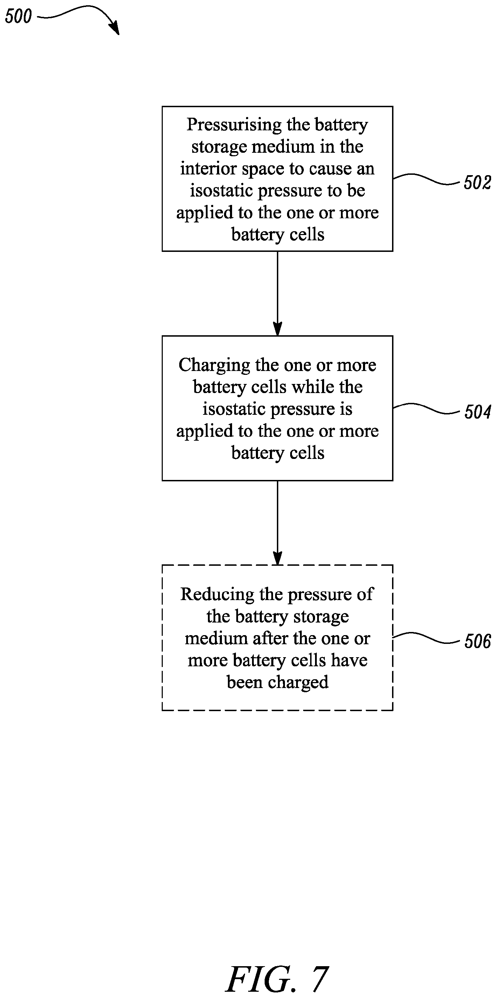

**Figure 7** is a flow diagram illustrating a method 500 of charging one or more battery cells according to the present disclosure. The one or more battery cells are housed in an interior space defined by a battery enclosure. The interior space contains a battery storage medium. In a first step 502, the method comprises pressurising the battery storage medium in the interior space to cause an isostatic pressure to be applied to the one or more battery cells. In a second step 504, the method comprises charging the one or more battery cells while the isostatic pressure is applied to the one or more battery cells. Optionally, in a third step 506, the method may comprises reducing the pressure of the battery storage medium after the one or more battery cells have been charged.

The system and method of the present disclosure provides the ability to charge one or more battery cells whilst suppressing the formation of dendrites. Without wishing to be bound by theory, it is believed that the formation of dendrites in lithium metal battery cells or lithium-ion battery cells can be suppressed by applying pressure to the battery cells during charging. By pressurising the battery storage medium in the interior space of the battery enclosure, an isostatic pressure can be applied to the battery cells by the battery storage medium. This advantageously reduces the formation of dendrites during the life of the battery cells. By suppressing dendrite formation, the risk of failure of the battery cells is reduced, improving safety and improving the operational life of the battery cells. By applying the isostatic pressure to the cells using the battery storage medium, clamps or other mechanical compression apparatus are not needed, reducing the potential weight of the battery enclosure. It has also been found that applying pressure to the battery cells can also enable the battery cells to be charged at a faster rate. Therefore, the system of the present disclosure can reduce the time lost for charging the battery cells. In some of the examples described above, the interior space is pressurised using a pressurising device which is disposed remote from the battery enclosure. For an aircraft, the pressurising device may be located on the ground, as part of a ground service unit, whilst the battery enclosure is located on the aircraft. In these examples, by using a ground-based pressurising device, weight and volume in the battery enclosure can be saved. In some of the examples described above, the pressurising device is a heater which can be disposed within the battery enclosure. In these examples, the pressurising device can be integrated into the battery pack with minimal weight and volume cost, enabling it to be used in electric and hybrid-electric aircraft. Using a heater as the pressurising device can also enable the pressure of the battery storage medium to be controlled accurately. This is particularly seen with the use of a PTC heater, as this enables the temperature, and therefore the pressure of the battery storage medium to be accurately maintained at a desired level, without the need for sensors or feedback control. By preventing overheating, the PTC heater is also safe for use in aircraft applications.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A battery charging system (1000, 1000', 1000"), comprising:
a battery enclosure (102, 102', 102") defining an interior space (103) containing a battery storage medium, the interior space configured to house one or more battery cells (101);
a charging terminal (107a, 107b) electrically coupled to the one or more battery cells and configured to receive electrical power from a power source (104) to charge the one or more battery cells;
wherein the interior space (103) is configured to be coupled to a pressurising device (106, 112) for applying pressure to the battery storage medium in the interior space; and
wherein during charging of the one or more battery cells, the battery storage medium in the interior space is pressurised to cause an isostatic pressure to be applied to the one or more battery cells.

2. A battery charging system as claimed in claim 1, wherein during discharge of the one or more battery cells, the pressure of the battery storage medium is configured to be reduced compared to the pressure of the battery storage medium during charging of the one or more battery cells.

3. A battery charging system as claimed in claim 1 or 2, wherein the battery storage medium is a gas.

4. A battery charging system as claimed in claim 3, wherein the pressurising device is a gas compression device.

5. A battery charging system as claimed in any preceding claim, wherein the power source is a charging device disposed remote from the battery enclosure.

6. A battery charging system as claimed in claim 4 or claim 5 wherein the pressurising device is integrated with the charging device.

7. A battery charging system as claimed in any of claims 1 to 4, wherein the pressurising device is integrated with the battery enclosure.

8. A battery charging system as claimed in claim 7, wherein the pressurising device comprises a heater configured to generate heat to pressurise the battery storage medium.

9. A battery charging system as claimed in claim 8, wherein the heater is disposed in the interior space.

10. A battery charging system as claimed in claim 8 or claim 9, wherein the interior space comprises a first plenum containing the battery storage medium and a second plenum containing a pressure-generating medium, the pressure-generating medium being compressible, and wherein the one or more battery cells are disposed within the first plenum and the heater is disposed in the second plenum, the heater configured to heat the pressure-generating medium.

11. A battery charging system as claimed in any of claims 8 to 10, wherein the heater is a positive temperature coefficient, PTC, heater.

12. A battery charging system as claimed in any preceding claim, wherein the isostatic pressure is between 120 kPa and 400 kPa.

13. A battery charging system as claimed in any preceding claim, wherein the power source is configured to charge the one or more battery cells at 100-500 kW.

14. A method (500) of charging one or more battery cells (101), wherein the one or more battery cells are housed in an interior space (103) defined by a battery enclosure (102, 102', 102"), the interior space containing a battery storage medium, the method comprising:
pressurising (502) the battery storage medium in the interior space to cause an isostatic pressure to be applied to the one or more battery cells; and
charging (504) the one or more battery cells while the isostatic pressure is applied to the one or more battery cells.

15. A method as claimed in claim 14, wherein the method further comprises reducing the pressure of the battery storage medium after the one or more battery cells have been charged.
